# EUROPÄISCHE PATENTANMELDUNG

(11) **EP 1 209 450 A1**
(43) Veröffentlichungstag der Anmeldung: **29.05.2002**
(21) Anmeldenummer: 01126996.6
(22) Anmeldetag: 14.11.2001
(51) Int. Cl.: G01F 23/24, F01M 11/12, G01F 23/00

(54) **Vorrichtung zur Ölstandsmessung**

(30) Priorität: 18.11.2000 DE 10057397
(71) Anmelder: Hella KG Hueck & Co., 59552 Lippstadt (DE)
(72) Erfinder: Schniederjohann, Guido, 59590 Geseke (DE)

(57) **Zusammenfassung**

Die vorliegende Erfindung bezieht sich auf eine Vorrichtung zur Ölstandsmessung in einem Verbrennungsmotor, insbesondere eines Kraftfahrzeugs, die ein Gehäuse aufweist, an dem unten ein sich im wesentlichen senkrecht erstreckender, länglicher Dämpfungsbecher (1) anbringbar ist, der mit einem Ölzulauf zur Beaufschlagung mit Öl und einem Ölablaufkanal zur Ableitung des Öls verbindbar ist, wobei ein Ölstandssensorelement von oben in den Dämpfungsbecher (1) einsetzbar ist. Um eine möglichst kurze Baulänge zu erreichen, schlägt die Erfindung vor, dass der Dämpfungsbecher (1) im oberen Randbereich Anschlussmittel (2) mit außenseitigen Befestigungselementen (6) aufweist, die innerhalb des Gehäuses festlegbar sind.

## Beschreibung

Die vorliegende Erfindung bezieht sich auf eine Vorrichtung zur Ölstandsmessung in einem Verbrennungsmotor, insbesondere eines Kraftfahrzeugs, die ein Gehäuse aufweist, an dem unten ein sich im wesentlichen senkrecht erstreckender, länglicher Dämpfungsbecher anbringbar ist, der mit einem Ölzulauf zur Beaufschlagung mit Öl und einem Ölablaufkanal zur Ableitung des Öls verbindbar ist, wobei ein Ölstandssensorelement von oben in den Dämpfungsbecher einsetzbar ist.

Derartige Vorrichtungen werden zur ständigen Überwachung des Ölstands in Verbrennungskraftmaschinen eingesetzt und arbeiten als Ölniveausensor nach einem thermischen Messprinzip, so dass sie allgemein als thermische Ölstandsgeber oder kurz TOG bekannt sind. Der grundsätzliche Aufbau eines derartigen Ölstandsgebers ergibt sich beispielsweise aus der DE 297 20 210 U1. Diese Vorrichtung weist ein offenes Gehäuse auf, welches von unten am Ölsumpf des Verbrennungsmotors angeflanscht wird. An diesem Gehäuse ist auf der Unterseite der Dämpfungsbecher angeschlossen, welcher in etwa die Form einer länglichen, unten geschlossenen Rohrhülse hat, die sich in Einbaulage senkrecht nach unten, d. h. vertikal erstreckt. Dieser Dämpfungsbecher wird im Betrieb durch das Gehäuse über eine Zulauföffnung mit Motorenöl beaufschlagt. Durch einen Ölablaufkanal, welcher ebenfalls oben im Bereich der Becheröffnung ausgebildet ist, kann das Öl wieder abfließen. Dadurch, dass der Ölablaufkanal einen vorgegebenen Ablaufquerschnitt und eine vorgegebene Länge erhält, wird der Öldurchfluss hydrodynamisch gedämpft, so dass sich in dem Dämpfungsbecher ein entsprechender Ölstand einstellt. Dieser Ölstand wird durch ein Ölstandssensorelement, nämlich eine Sensorleiterplatte, welche in dem Gehäuse gehaltert ist und von oben in den Dämpfungsbecher hineinragt, erfasst und von einer daran angeschlossenen Messschaltung ausgewertet.

Bei einer im Stand der Technik bekannten Ausführungsform gemäß der vorgenannten DE 297 20 210 U1 ist der Dämpfungsbecher auf einen Rohransatz des Gehäuses aufgesteckt. Die Befestigung erfolgt durch eine Schnappverbindung, welche durch einen außen an dem Rohransatz angeformten Rastwulst und eine damit korrespondierende, im Inneren des Dämpfungsbechers ausgebildete, hinterschnittene Nut gebildet wird. Der vorgenannte Ölablaufkanal erstreckt sich in Richtung des Rohrstutzens, d. h. parallel zur Längserstreckung des Dämpfungsbechers ebenfalls senkrecht.

Die vorgenannte Ausführungsform hat den Vorteil, dass der Dämpfungsbecher einfach durch Aufstecken auf den Rohransatz in Längsrichtung aufgeschnappt werden kann und zugleich eine dauerhafte und haltbare Verbindung erreicht wird. Der Ölablaufkanal kann dabei einfach durch eine nutartige Einformung in der Außenwandung des Rohrabschnitts in Dämpfungsbecher-Längsrichtung realisiert werden, wobei die Länge und der Querschnitt dieses Dämpfungskanals durch die Länge des Rohransatzes vorgegeben werden kann. Nachteilig an dieser Ausführungsform ist jedoch, dass die Ausbildung der Rastelemente eine gewisse Mindestlänge des Rohransatzes voraussetzt, mit welcher dieser in den Dämpfungsbecher eintaucht. Die senkrechte Ausbildung des Ölablaufkanals an diesem Rohrstutzen bedingt ebenfalls eine gewisse Mindestlänge. Dadurch ergibt sich eine relativ große Baulänge des Dämpfungsbechers sowie eine entsprechend lange Sensorleiterplatte, damit diese möglichst weit in den Dämpfungsbecher eintauchen kann.

Ein Problem bei dieser bekannten Vorrichtung ergibt sich daraus, dass seitens der Kraftfahrzeughersteller ein möglichst kurzer Einbauraum gefordert wird, und zwar ohne dass die Funktionalität beeinträchtigt oder der Fertigungsaufwand erhöht wird.

Zur Lösung dieser Problematik wird erfindungsgemäß ausgehend von dem eingangs erwähnten Stand der Technik vorgeschlagen, dass der Dämpfungsbecher im oberen Randbereich Anschlussmittel mit außenseitigen Befestigungselementen aufweist, die innerhalb des Gehäuses festlegbar sind.
Im Unterschied zum Stand der Technik sind die Befestigungselemente auf die Außenseite des Dämpfungsbechers verlegt. Dadurch kann der von oben in die Öffnung des Dämpfungsbechers eintauchende Rohransatz entfallen, wodurch eine Verkürzung des Dämpfungsbechers um die Länge des im Stand der Technik erforderlichen Rohransatzes erfolgen kann. Besonders vorteilhaft ist daran, dass durch die eingesparte Baulänge die diesbezüglichen Vorgaben der Fahrzeugindustrie besser erfüllt werden können.

Besonders vorteilhaft ist eine Ausführung der Erfindung, bei welcher sich der Ölablaufkanal waagerecht vom Dämpfungsbecher zur Seite erstreckt. Im Gegensatz zu dem oben zitierten Stand der Technik, bei dem sich der Ablaufkanal längs des Rohransatzes parallel zur Erstreckung des Dämpfungsbechers in der Senkrechten erstreckt und dadurch eine Mindestlänge des Rohransatzes und damit der Gesamtbaulänge vorgibt, geht erfindungsgemäß der Ölablaufkanal von der Öffnung des Dämpfungsbechers aus seitlich ab, d. h. waagerecht bzw. quer zu dessen Längserstreckung. Dadurch wird erreicht, dass die erforderliche Länge des Dämpfungsbechers im wesentlichen durch die Abmessungen des Ölstandssensorelements, d. h. der Sensorleiterplatte bestimmt wird, und nicht durch die hydrodynamisch erforderliche Länge des Ölablaufkanals. Dies kommt ebenfalls der geforderten kurzen Baulänge entgegen.

Die erfindungsgemäß außen angebrachten Anschlussmittel können Rastelemente umfassen, welche in entsprechende Gegenrasten in einer Aufnahmeöffnung des Gehäuses einschnappbar sind. Diese äußere Verrastung, welche die innenliegende Bauform im Stand der Technik ersetzt, behält bei ihrer erfindungsgemäßen Verlegung auf die Außenseite die bekannten Vorteile wie die einfache Montage und dauerhafte Fixierung.

Die Rastelemente können quer zur Längserstreckung des Dämpfungsbechers verlaufende Rastkanten umfassen. Diese Rastkanten können als horizontale oder geneigte, nach außen vorstehende Stufen ausgebildet sein. Das Gehäuse weist eine entsprechende Einsetzöffnung auf, welche mit nach innen vorstehenden Rastnasen oder entsprechend hinterschnittenen Stufenkanten versehen ist, welche hinter die Rastkanten an dem Dämpfungsbecher einschnappbar sind.

Eine vorteilhafte Weiterbildung der Erfindung sieht vor, dass die Anschlussmittel zumindest zwei parallele Außenflächen haben, auf denen die Rastelemente ausgebildet sind. Diese Außenflächen liegen beispielsweise auf gegenüberliegenden Außenseiten. Dadurch werden ebene Anlageflächen geschaffen, welche an entsprechende Gegenflächen in der Aufnahmeöffnung des Gehäuses angepasst werden können, so dass eine eindeutige Orientierung des Dämpfungsbechers gewährleistet ist. Außerdem ergibt sich eine definierte elastische Beanspruchung des Dämpfungsbechers beim Einrasten, da die auftretenden elastischen Verformungen im wesentlichen normal auf die parallelen Außenflächen wirken.

Eine weitere Verbesserung bezüglich der elastischen Verformung beim Einrasten und damit der Materialbeanspruchung kann dadurch erreicht werden, dass die Rastelemente auf der elastisch nachgiebigen Außenwand einer außen an dem Dämpfungsbecher angeformten Hohlkammer angeordnet sind. Diese Hohlkammer kann beispielsweise dadurch realisiert werden, dass im Randbereich des Dämpfungsbechers auf der Außenseite eine Art seitlich abstehender Bügel oder Steg angebracht ist, dessen Materialstärke so bemessen ist, dass dessen äußerer Wandbereich gegen die Außenwandung des Dämpfungsbechers elastisch federnd gelagert ist. Dadurch können die auf der Außenwand der Hohlkammer angeordneten Rastelemente beim Einrasten des Dämpfungsbechers in das Gehäuse gegen den Dämpfungsbecher zusammengedrückt werden, ohne das der Dämpfungsbecher selbst verformt wird. Dadurch wird die Materialbeanspruchung des Dämpfungsbechers reduziert. Darüber hinaus ist es durch die Formgebung der Hohlkammer problemlos möglich, den Außenflächen bzw. den Rastelementen vom Außenumfang des Dämpfungsbechers im Randbereich unabhängige Formen bzw. Abmessungen zu geben. So können beispielsweise bei einem runden Dämpfungsbecher durch die Außenwände der Hohlkammern parallele ebene Außenflächen realisiert werden.

Die Rastkanten können sich geradlinig waagerecht oder leicht geneigt zur Längserstreckung des Dämpfungsbechers erstrecken. Auf diese Weise lässt sich beim Einsetzen in Längsrichtung eine vorteilhaft kurze Baulänge realisieren.

Der Ölablaufkanal erstreckt sich bevorzugt vom Randbereich des Dämpfungsbechers, d. h. der im Montagezustand an das Gehäuse angeschlossenen Öffnung des Dämpfungsbechers. Dort kann der Ölablaufkanal beispielsweise als waagerechte Nut in der anschlussseitigen Stirnseite des Dämpfungsbechers ausgebildet sein. Diese Nut wird in montiertem Zustand des Dämpfungsbechers durch die Flanschgegenfläche an dem Gehäuse abgedeckt und bildet auf diese Weise einen geschlossenen Kanal. Eine derartige Nut lässt sich mit besonders geringem Aufwand in das Material des Dämpfungsbechers einformen.

Bevorzugt ist die vorgenannte Nut in einem Vorsprung des Befestigungsflansches eingeformt. Dadurch lässt sich die Länge des Ölablaufkanals vorgeben, ohne die Einbaulänge zu vergrößern.

Der Ölablaufkanal ist vorzugsweise in einem Bereich zwischen den Rastelementen angeordnet. Dadurch kann der Dämpfungsbecher im Bereich des Ölablaufkanals frei von Verformungen beim Verrasten in dem Gehäuse gehalten werden. Außerdem bleibt so ein größerer Freiraum für die waagerechte Führung des Kanalquerschnitts.

Bevorzugt ist der Dämpfungsbecher als einstückiges Kunststoffformteil ausgebildet, und zwar einschließlich der Anschlussmittel und des Ölablaufkanals. Dadurch wird eine rationelle Fertigung ermöglicht, wobei moderne Kunststoffe eine hinreichende Elastizität und Dauerfestigkeit aufweisen, welche ein problemloses Einrasten sowie eine lange Haltbarkeit ermöglicht.

Die Erfindung wird im folgenden anhand eines Ausführungsbeispiels unter Bezugnahme auf die beiliegenden Zeichnungen näher erläutert. Im einzelnen zeigen:
- Fig. 1: eine perspektivische Ansicht schräg von oben auf einen erfindungsgemäßen Dämpfungsbecher;
- Fig. 2: eine Vorderansicht des oberen Teils des Dämpfungsbechers gemäß Fig. 1;
- Fig. 3: eine Seitenansicht von links des oberen Teils des Dämpfungsbechers gemäß Fig. 1;
- Fig. 4: einen Teilquerschnitt A-A;
- Fig. 5: einen Teilquerschnitt B-B;
- Fig. 6: eine Draufsicht auf den Dämpfungsbecher gemäß Fig. 1 bis 5.

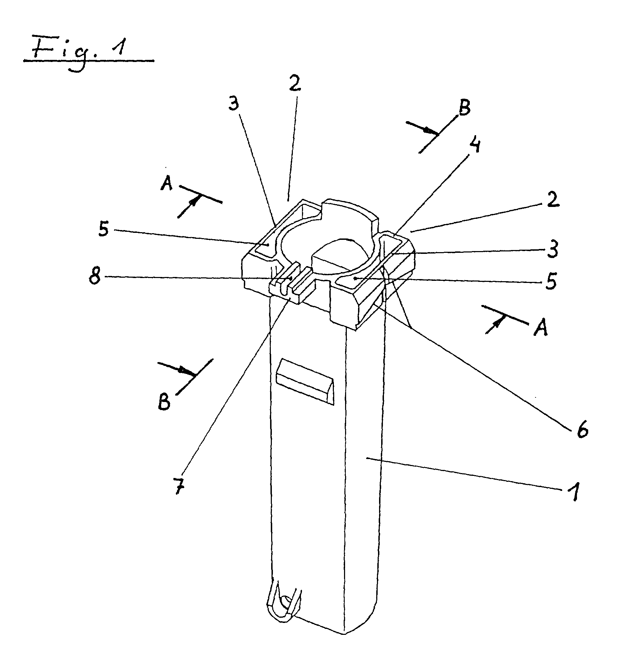

In Fig. 1 ist ein erfindungsgemäßer Dämpfungsbecher als Ganzes mit dem Bezugszeichen 1 versehen. Dieser ist rohrförmig, unten geschlossen ausgebildet und steht in Einbaulage, wie dargestellt, mit seiner Längserstreckung vertikal, d. h. senkrecht nach unten.

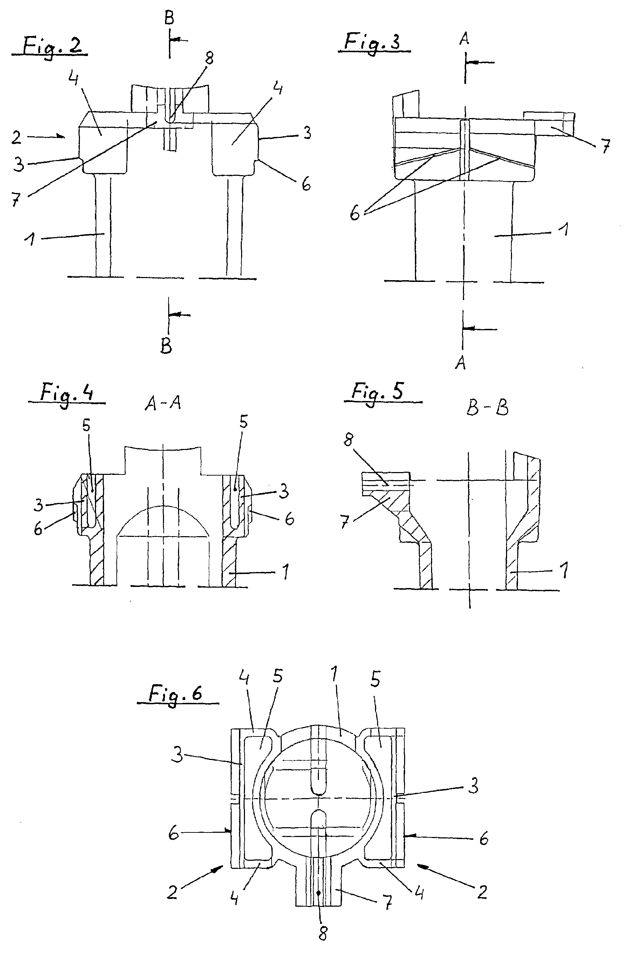

Der obere Bereich des Dämpfungsbechers ist in Fig. 2 und Fig. 3 einmal in Vorder- und einmal in Seitenansicht dargestellt sowie in Fig. 4 und in Fig. 5 im Querschnitt A-A bzw. im Längsschnitt B-B. Fig. 6 zeigt eine Draufsicht auf die obenliegende Öffnung des Dämpfungsbechers 1. In sämtlichen Darstellungen finden für dieselben Teile dieselben Bezugszeichen Verwendung.

Im oberen Bereich des Dämpfungsbechers 1, d. h. in den an die Öffnung angrenzenden Außenwänden, sind Anschlussmittel 2 angeformt. In der dargestellten Ausführung umfassen diese auf gegenüberliegenden Seiten des Dämpfungsbechers 1 liegende, bezüglich ihrer Außenseiten parallel stehende Außenwände 3. Diese sind über Seitenwände 4 einstückig an dem Dämpfungsbecher angeformt. Dadurch werden zwischen den Außenwänden 3 und der Rohrwandung des Dämpfungsbechers 1 Hohlkammern 5 gebildet, die in dem Schnitt in Fig. 4 deutlich erkennbar sind.

Auf der Außenseite der Außenwände 3 sind stufenförmige Rastkanten 6 ausgebildet. Diese verlaufen geradlinig, und zwar quer zur Längserstreckung des Dämpfungsbechers, wobei sie nach außen geneigt abfallen, wie dies in Fig. 1 und Fig. 3 besonders gut erkennbar ist. Alternativ ist es ebenfalls möglich, diese völlig waagerecht anzuordnen.

Das Kunststoffmaterial des Dämpfungsbechers 1 hat eine gewisse Eigenelastizität. Die Wandungsstärke der Außenwände 3 wird so gewählt, dass die Rastkanten 6 zum Einschnappen in eine korrespondierende Öffnung eines Gehäuses zumindest um ihre Höhe elastisch zusammengedrückt werden können. Dabei werden die Seitenwände 3 lediglich in Richtung der Hohlkammern 5 verformt. Der Dämpfungsbecher 1 wird dabei nicht verformt.

Auf der Vorderseite ist am Rand der Öffnung des Dämpfungsbechers 1 ein seitlicher Vorsprung 7 ebenfalls einstückig angeformt. Auf der Oberseite dieses Vorsprungs 7, d. h. der Stirnseite des Dämpfungsbechers 1 bezüglich des Einsetzens in das Gehäuse ist ein Ölablaufkanal 8 eingeformt, und zwar als waagerechte, sich von der Öffnung des Dämpfungsbechers 1 zur Seite erstreckende Nut.

Die Anordnung der Anschlussmittel 2 mit den Außenwänden 3 und den Seitenwänden 4 sowie dem Vorsprung 7 mit dem Ölablaufkanal 8 ergibt sich besonders deutlich aus der Draufsicht auf die Öffnung des Dämpfungsbechers 1 gemäß Fig. 6.

Dadurch, dass der nutförmige Ölablaufkanal 8 bei der Montage des Dämpfungsbechers 1 durch die Gegenfläche an dem Gehäuse abgedeckt wird, wird ein geschlossener Kanal gebildet. Dadurch dass dieser Ölablaufkanal 8 sich waagerecht, d. h. seitlich bezüglich der Längserstreckung des Dämpfungsbechers 1 erstreckt, ist die gesamte Baulänge zunächst unabhängig von den Abmessungen dieses Ölablaufkanals 8. Diese kurze Baulänge wird insbesondere auch dadurch ermöglicht, dass die Rastkanten 6 bezüglich des Dämpfungsbechers 1 auf der Außenseite angeordnet sind. Dadurch sind keine Rohransätze oder dergleichen wie im Stand der Technik erforderlich, welche die Messhöhe eines von oben in den Dämpfungsbecher 1 eingesetzten Sensorelements reduzieren könnten. Dadurch können sämtliche Vorgaben bezüglich einer möglichst kurzen Baulänge erfüllt werden.

## Patentansprüche

1. Vorrichtung zur Ölstandsmessung in einem Verbrennungsmotor, insbesondere eines Kraftfahrzeugs, die ein Gehäuse aufweist, an dem unten ein sich im wesentlichen senkrecht erstreckender, länglicher Dämpfungsbecher (1) anbringbar ist, der mit einem Ölzulauf zur Beaufschlagung mit Öl und einem Ölablaufkanal zur Ableitung des Öls verbindbar ist, wobei ein Ölstandssensorelement von oben in den Dämpfungsbecher (1) einsetzbar ist, **dadurch gekennzeichnet, dass** der Dämpfungsbecher (1) im oberen Randbereich Anschlussmittel (2) mit außenseitigen Befestigungselementen (6) aufweist, die innerhalb des Gehäuses festlegbar sind.

2. Vorrichtung nach Anspruch 1, **dadurch gekennzeichnet, dass** sich der Ölablaufkanal (8) waagerecht vom Dämpfungsbecher (1) zur Seite erstreckt.

3. Vorrichtung nach Anspruch 1 oder 2, **dadurch gekennzeichnet, dass** die Anschlussmittel (2) Rastelemente (6) umfassen.

4. Vorrichtung nach einem der Ansprüche 1 bis 3, **dadurch gekennzeichnet, dass** die Rastelemente (6) quer zur Längserstreckung des Dämpfungsbechers (1) verlaufende Rastkanten (6) umfassen.

5. Vorrichtung nach einem der Ansprüche 1 bis 4, **dadurch gekennzeichnet, dass** die Anschlussmittel (2) zumindest zwei parallele Außenflächen (3) haben, auf denen die Rastelemente (6) ausgebildet sind.

6. Vorrichtung nach einem der Ansprüche 1 bis 5, **dadurch gekennzeichnet, dass** die Rastelemente (6) auf der elastisch nachgiebigen Außenwand (3) einer an dem Dämpfungsbecher (1) angeformten Hohlkammer (5) angeordnet sind.

7. Vorrichtung nach einem der Ansprüche 1 bis 6, **dadurch gekennzeichnet, dass** die Rastkanten (6) sich geradlinig waagerecht oder leicht geneigt erstrecken.

8. Vorrichtung nach einem der Ansprüche 1 bis 7, **dadurch gekennzeichnet, dass** der Ölablaufkanal (8) sich vom Randbereich der Öffnung des Dämpfungsbechers (1) erstreckt.

9. Vorrichtung nach einem der Ansprüche 1 bis 8, **dadurch gekennzeichnet, dass** der Ölablaufkanal (8) als waagerechte Nut in der anschlussseitigen Stirnseite des Dämpfungsbechers (1) ausgebildet ist.

10. Vorrichtung nach Anspruch 9, **dadurch gekennzeichnet, dass** die Nut (8) in einem Vorsprung (7) eingeformt ist.

11. Vorrichtung nach einem der Ansprüche 1 bis 10, **dadurch gekennzeichnet, dass** der Ölablaufkanal (8) in einem Bereich zwischen den Rastelementen (6) angeordnet ist.

12. Vorrichtung nach einem der Ansprüche 1 bis 11, **dadurch gekennzeichnet, dass** der Dämpfungsbecher (1) als einstückiges Kunststoffformteil ausgebildet ist, einschließlich der Anschlussmittel (2, 6) und des Ölablaufkanals (7, 8).
